# EUROPÄISCHE PATENTSCHRIFT

(11) **EP 2 636 458 B1**
(45) Veröffentlichungstag und Bekanntmachung des Hinweises auf die Patenterteilung: **24.06.2015**
(21) Anmeldenummer: 13153376.2
(22) Anmeldetag: 31.01.2013
(51) Int. Cl.: B07C 5/34, G01B 11/24, G07F 7/06, G06K 9/20, G06K 9/32, G06K 9/34, B07C 5/12, G06K 9/48

(54) **Vorrichtung und Verfahren zur Form- und Gewichtserkennung von Leergutbehältern**
Method and device for detecting shape and weight of returnable packaging containers
Dispositif et procédé destinés à la reconnaissance de la forme et du pois de récipients d'emballage vides

(30) Priorität: 08.03.2012 DE 102012004729
(43) Veröffentlichungstag der Anmeldung: 11.09.2013
(73) Patentinhaber: Wincor Nixdorf International GmbH, 33106 Paderborn (DE)
(72) Erfinder: Jokhovets, Lioubov, 98693 Ilmenau (DE)

(56) Entgegenhaltungen:
- EP-A1- 2 278 562
- EP-A1- 2 290 624
- EP-A2- 1 900 446
- WO-A1-2012/031651

## Beschreibung

Die Erfindung betrifft eine Vorrichtung zur Erkennung von Leergutbehältern in einem Leergut-Rücknahmeautomat mit einer Aufnahmeeinheit enthaltend ein um eine Drehachse drehbar gelagertes Drehorgan, das mindestens eine Auflagefläche zur Aufnahme des Leergutbehälters in einer ersten Drehstellung und zur Abgabe desselben in einer zweiten Drehstellung aufweist, mit einer optischen Erkennungseinheit zur Formerkennung des Leergutbehälters, mit einer Steuereinheit zur Verarbeitung von Bilddaten der optischen Erkennungseinheit und zur Ansteuerung des Drehorgans.

Ferner betrifft die Erfindung ein Verfahren zur Erkennung von Leergutbehältern, wobei der Leergutbehälter auf einer Auflagefläche eines Drehorgans abgelegt wird und mittels einer optischen Erkennungseinheit erfasst wird, so dass aus den von der optischen Erkennungseinheit bereitgestellten Bilddaten Identifizierungsdaten ermittelt werden zur Formerkennung des Leergutbehälters.

Aus der EP 2 290 624 A1 ist eine Vorrichtung zur Erkennung von Leergutbehältern in einem Leergut-Rücknahmeautomat bekannt, bei der eine Gewichtserkennung des Leergutbehälters ohne einen eigens dafür vorgesehenen Gewichtssensor ermöglicht wird. Durch Hinterlegung einer Gewichts-/Drehzahlkennlinie kann aus der aktuellen Verfahrgeschwindigkeit des Leergutbehälters auf das Gewicht desselben geschlossen werden. Ist das Gewicht zu groß, enthält der Leergutbehälter noch Restflüssigkeit und wird an den Kunden zurückgegeben. Mittel zur Formerkennung des Leergutbehälters sind aus dieser Druckschrift nicht bekannt.

Aus der EP 2 278 562 A1 ist eine Vorrichtung zur Erkennung von Leergutbehältern in einem Leergut-/Rücknahmeautomat bekannt, die eine Aufnahmeeinheit mit einem Drehorgan vorsieht. Das Drehorgan ist als eine Flügelwelle ausgebildet, die eine muldenförmige Auflagefläche bildet zur Aufnahme eines Leergutbehälters. Durch Verdrehen der Flügelwelle um seine Drehachse kann der Leergutbehälter nach erfolgreicher Prüfung der Annahme an eine weitere Funktionseinheit platzsparend weitergegeben werden. Der Aufnahmeeinheit ist eine optische Erkennungseinheit zur Formerkennung des Leergutbehälters zugeordnet, so dass eine Identifizierung des Leergutbehälters ermöglicht wird. In Abhängigkeit von der Identifizierung erfolgt gegebenenfalls die Ausgabe eines Pfandbeleges. Die optische Erkennungseinheit generiert Bilddaten von dem Leergutbehälter während der Verdrehung desselben um die Drehachse der Flügelwelle, so dass mit hoher Sicherheit die Form des Leergutbehälters erkannt werden kann. Allerdings ist der Rechenaufwand für die Formerkennung relativ aufwendig, da aufgrund des fehlenden Kontrastes zum Hintergrund die Kontur des Leergutbehälters nicht immer feststellbar ist. Es wäre somit wünschenswert, mit einem relativ geringen logischen bzw. rechentechnischen Aufwand platzsparend eine Formerkennung bereitzustellen.

Aus der nachveröffentlichten DE 10 2010 037 448.2 ist eine Vorrichtung zur Erkennung von Leergutbehältern bekannt, die eine Aufnahmeeinheit mit einem ebenen Förderband aufweist, auf das der Leergutbehälter positioniert ist. Das Förderband weist ein Referenzmuster auf und ermöglicht durch Auswertung von mittels einer optischen Erkennungseinheit erfassten Bilddaten des Leergutbehälters und des durch das Referenzmuster gebildeten Hintergrundes eine einfache Konturbestimmung des Leergutbehälters. Nachteilig an der bekannten Vorrichtung ist, dass die Aufnahmeeinheit mit dem Förderband relativ voluminös ausgebildet ist.

Aufgabe der vorliegenden Erfindung ist es daher, eine Vorrichtung und ein Verfahren zur Erkennung von Leergutbehältern in einem Leergut-Rücknahmeautomat anzugeben, dass platzsparend und mit geringem Aufwand eine Identifizierung von Leergutbehältern gewährleistet ist.

Zur Lösung dieser Aufgabe ist die Erfindung in Verbindung mit dem Oberbegriff des Patentanspruchs 1 dadurch gekennzeichnet, dass die Auflagefläche mit einem Referenzmuster versehen ist derart, dass aus dem von der optischen Erkennungseinheit verfassten Bilddaten Identifizierungsdaten ableitbar sind zur Formerkennung des Leergutbehälters und/oder Positionsbestimmung desselben.

Der besondere Vorteil der erfindungsgemäßen Vorrichtung besteht darin, dass die Identifizierung der Leergutbehälter in einer kompakten Aufnahmeeinheit und mit relativ geringem Bauteilaufwand bzw. rechentechnischen Aufwand ermöglicht wird. Dadurch, dass die Auflagefläche ein Referenzmuster bildet, können die Leergutbehälter leichter erkannt werden, so dass eine Rückgabe wegen Fehlerkennung des Leergutbehälters weitgehend vermieden wird. Das Referenzmuster ermöglicht auf einfache Weise, dass die Kontur des Leergutbehälters durch Abtasten von Schnittpunkten des Leergutbehälterbildes mit dem Referenzmuster gewonnen wird. Die erfindungsgemäße Vorrichtung ermöglicht somit insbesondere eine genauere Formerkennung der Leergutbehälter.

Nach einer Weiterbildung der Erfindung ist eine Datenbank mit einer Mehrzahl von leergutbehältertypbezogenen Vergleichsdaten vorgesehen, so dass durch Vergleich der erfassten Bilddaten mit den Vergleichsdaten die die Form des Leergutbehälters kennzeichnenden Identifizierungsdaten ermittelbar sind. Dieser Vergleich bezieht sich im Wesentlichen auf Konturbilddaten der Leergutbehälter. Durch Einzelvergleich der ermittelten Konturbilddaten des Leergutbehälters mit den in der Datenbank abgespeicherten leergutbehältertypbezogenen Konturbilddaten kann eine präzise Formerkennung unterschiedlicher Leergutbehälter erfolgen.

Nach einer Weiterbildung der Erfindung ist das Referenzmuster als ein Streifenmuster ausgebildet mit einer Mehrzahl von quer zu Längsachse des abgelegten Leergutbehälters und/oder des Drehorgans verlaufenen Streifen. Vorteilhaft kann hierdurch zum einem eine eindeutige Bestimmung der Konturschnittpunkte des abgelegten Leergutbehälters erfolgen. Darüberhinaus bieten regelmäßig angeordnete Streifen (im gleichen Abstand) ein Maß für die Längenbestimmung des erfassten Leergutbehälters. Auch eine Positionsbestimmung des Leergutbehälters in der Aufnahmeeinheit kann durch ein Streifenmuster relativ schnell erfolgen. Dadurch, dass die den Leergutbehälter aufnehmenden beiden Flügelflächen mit dem Streifenmuster versehen sind, kann die Genauigkeit der optischen Erkennung verbessert werden.

Nach einer Weiterbildung der Erfindung ist das Drehorgan als eine Flügelwelle ausgebildet mit einer Anzahl von Flügelflächen, die eine Mulde bilden zur Aufnahme des abzutastenden Leergutbehälters. Vorteilhaft ist die optische Erkennungseinheit ohne Kalibrierung betreibbar. Ein die Formerkennung beeinflussender Parameter ist lediglich der Einstellungswinkel der optischen Erkennungseinheit zu der Flügelwelle, der sich in der Ebene der Drehachse des Drehorgans erstreckt. Denn der Erkennungsfehler bei einer um einen Drehwinkel verdrehten Flügelwelle ist relativ gering.

Nach einer Weiterbildung der Erfindung ist das Drehorgan in einem Überprüfungsmodus mit einer vorgegebenen Drehgeschwindigkeit derart von einer ersten Drehstellung in eine weitere Drehstellung verdrehbar, dass durch Auswertung der durch die optische Erkennungseinheit erfassten zeitlich veränderten Bilddaten die Identifizierungsdaten zur Gewichtserkennung des Leergutbehälters ableitbar sind. Die Veränderung des Streifenabstandes während der Drehbewegung ist ein Maß für Größe der die den Motorantrieb entgegengesetzten Last und damit für das Gewicht des Leergutbehälters. Durch Vergleich mit entsprechenden Motorkennlinien kann dann auf das Gewicht des Leergutbehälters geschlossen werden. Die Abstandsänderung der Streifen pro Zeit zueinander bei Verdrehung des Drehorgans ist ein Maß für die Drehgeschwindigkeit des Drehorgans und kann aus den kontinuierlich aufgenommenen Bilddaten berechnet werden. Ist die Drehgeschwindigkeit berechnet, kann durch Ermittlung der Differenz zu der Solldrehgeschwindigkeit auf das aktuelle Gewicht des Leergutbehälters geschlossen werden.

Nach einer Weiterbildung der Erfindung weist die Datenbank Vergleichskonturdaten von Leergutbehältern nicht nur für die Solllage derselben auf dem Drehorgan, sondern auch für eine Endlage derselben auf dem Drehorgan auf. Die Vergleichskonturdaten der Leergutbehälter für eine Endlage repräsentieren somit im Vergleich zu der Solllage verzerrte Konturdaten der Leergutbehälter. Durch diese Erweiterung der Datenbank können vorteilhaft auch Leergutbehälter erkannt werden, die von einem Kunden beabstandet von einer Solllage abgelegt worden sind.

Zur Lösung der Aufgabe ist das erfindungsgemäße Verfahren in Verbindung mit dem Oberbegriff des Patentanspruchs 8 dadurch gekennzeichnet, dass der auf der mit einem Referenzmuster versehenen Auflagefläche liegende Leergutbehälter im Ruhezustand von der optischen Erkennungseinheit erfasst wird, wobei durch Vergleich der ermittelten Bilddaten mit vorgegebenen leergutbehältertypbezogenen Vergleichsdaten, die die formbestimmenden Identifizierungsdaten des Leergutbehälters bestimmt werden.

Das erfindungsgemäße Verfahren ermöglicht eine einfache und präzise Formerkennung von Leergutbehältern.

Nach einer Weiterbildung des erfindungsgemäßen Verfahrens werden Konturdaten des Leergutbehälters durch Identifizierung von Schnittpunkten zwischen einem Rand des Leergutbehälters und dem Referenzmuster ermittelt, die dann mit leergutbehältertypbezogenen vorab gespeicherten Vergleichskonturdaten auf Übereinstimmung verglichen werden. Hieraus können dann die Form und/oder das Material des Leergutbehälters bestimmt werden. Vorteilhaft kann hierdurch eine relativ präzise Formerkennung bereitgestellt werden.

Nach einer Weiterbildung des erfindungsgemäßen Verfahrens wird zusätzlich zu den die Form des Leergutbehälters kennzeichnenden Konturdaten auch die Position des Leergutbehälters innerhalb der Aufnahmeeinheit erfasst. Wird festgestellt, dass sich der Leergutbehälter außerhalb einer Solllage befindet und somit lediglich verzerrte Konturbilddaten vorliegen, werden diese Konturbilddaten in Abhängigkeit von dem aktuellen Abstand des Leergutbehälters zu der Endlage umgerechnet in Konturbilddaten, als befände sich der Leergutbehälter in der Solllage. Nachfolgend kann dann durch Vergleich mit den in der Datenbank abgespeicherten Vergleichskonturdaten die Form des Leergutbehälters bestimmt werden. Vorteilhaft kann hierdurch relativ einfach eine Formerkennung unabhängig von der Lage des Leergutbehälters bereitgestellt werden. In diesem Fall enthält der Datenspeicher nur Konturbilddaten der in einer Solllage befindlichen Leergutbehälter.

Nach einer Weiterbildung des erfindungsgemäßen Verfahrens erfolgt zur Gewichtserkennung des Leergutbehälters eine Verdrehung des Leergutbehälters um eine Drehachse, nachdem die Formerkennung des Leergutbehälters abgeschlossen worden ist. Während der Verdrehung des Leergutbehälters um eine beabstandet zu der Längsachse des Leergutbehälters angeordneten Drehachse erfolgt die optische Erfassung einer Abstandsänderung pro Zeit von Musterelementen des Referenzmusters, so dass hieraus in Verbindung mit entsprechenden vorgegebenen Bilddaten eine Geschwindigkeit errechnet werden kann, die als Maß für das Gewicht des Leergutbehälters dient. Durch Vergleich mit einem gewichtsbezogenen Schwellwert für den entsprechenden Leergutbehältertyp kann dann ermittelt werden, ob der Leergutbehälter einen unzulässig hohen Füllungsgrad mit Flüssigkeit aufweist. Wird ein zu großer Füllungsgrad des Leergutbehälters erkannt, wird der Leergutbehälter an den Kunden zurückgegeben. Liegt der Füllungsgrad des Leergutbehälters innerhalb der vorgegebenen Bandbreite, wird der Leergutbehälter an eine weitere Funktionseinheit weitergegeben, so dass gegebenenfalls ein weiterer Leergutbehälter in die Aufnahmeeinheit eingesetzt werden kann.

Weitere Vorteile der Erfindung ergeben sich aus den weiteren Unteransprüchen.

Ein Ausführungsbeispiel der Erfindung wird nachfolgend anhand der Figuren näher erläutert.

Es zeigen:

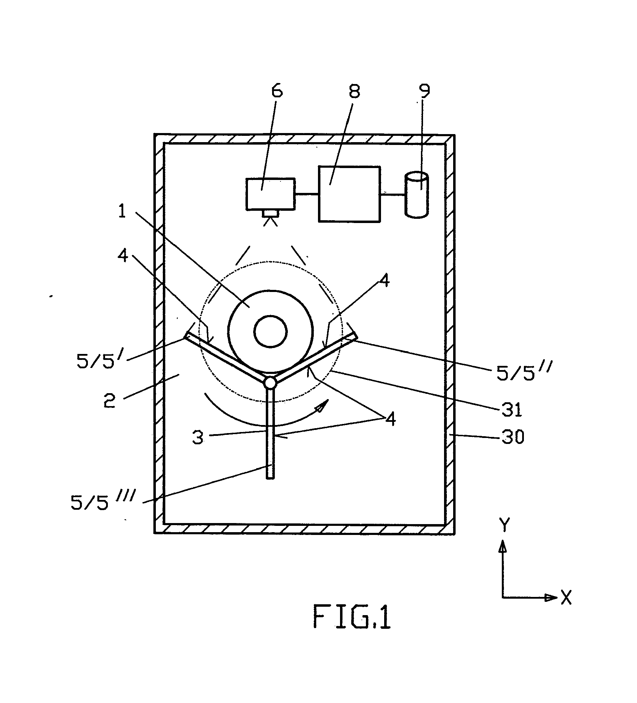

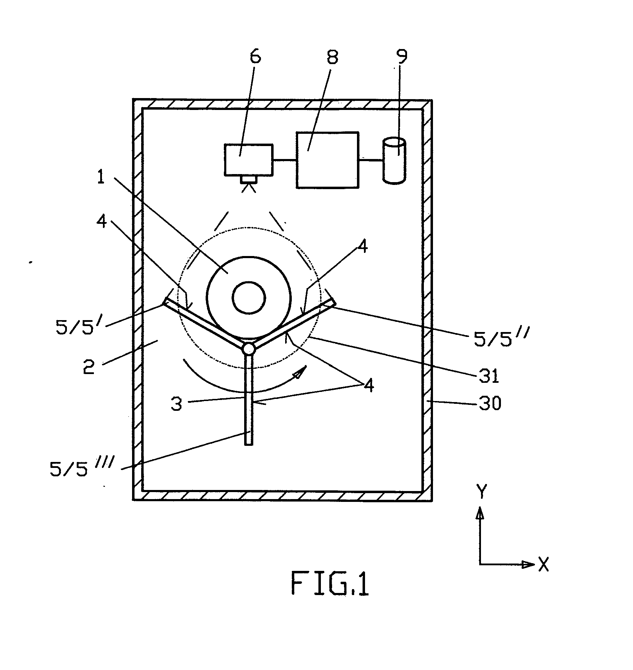

- Figur 1: eine perspektivische Darstellung einer erfindungsgemäßen Vorrichtung mit einem Drehorgan, einer optischen Erkennungseinheit sowie einer Steuereinheit,

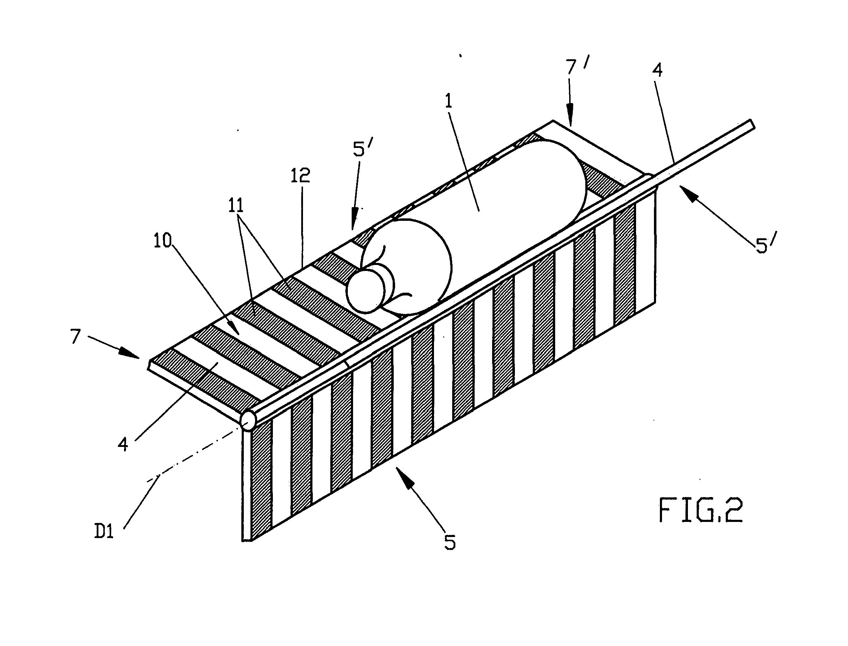

- Figur 2: eine perspektivische Ansicht eines auf dem Drehorgan abgelegten Leergutbehälters,
- Figur 3: eine schematische Draufsicht auf das Drehorgan,
- Figur 4: ein Ablaufdiagramm zur Formbestimmung der Leergutbehälter und
- Figur 5: ein Ablaufdiagramm für eine Gewichtsbestimmung der Leergutbehälter.

Eine Vorrichtung zur Erkennung von Leergutbehältern 1 ist in einer Aufnahmeeinheit 2 eines Leergut-Rücknahmeautomaten 30 angeordnet. Der Leergut-Rücknahmeautomat 30 weist eine vorzugsweise kreisförmige Eingabeöffnung 31 auf, durch die ein Benutzer den Leergutbehälter 1 in die sich an die Eingabeöffnung 31 anschließende Aufnahmeeinheit 2 des Leergut-Rücknahmeautomaten 30 einsetzen kann. Nach erfolgter Erkennung durch die erfindungsgemäße Vorrichtung wird dann der eingesetzte Leergutbehälter 1 einer weiteren Funktionseinheit übergeben, so dass die Leergutbehälter 1 in Abhängigkeit von ihrer Form in einem Sammelbehälter abgelegt werden können. Der Benutzer erhält nach Abschluss des Verarbeitungsverfahrens einen Bon mit dem entsprechenden Pfandwert ausgedruckt. Wird durch die erfindungsgemäße Vorrichtung erkannt, dass der Leergutbehälter 1 nicht zur Weiterverarbeitung geeignet ist, wird ein Rückgabesignal erzeugt, damit der Benutzer den abgelehnten Leergutbehälter 1 aus der Aufnahmeeinheit 2 entfernen kann.

Der Leergutbehälter 1 ist vorzugsweise als eine Flasche ausgebildet, die aus einem transparenten Material, beispielsweise Kunststoff oder Glas, besteht. Üblicherweise weist der Leergutbehälter 1 ein Etikett auf, das mit einem Strichcode als Identifizierungsmerkmal versehen ist. Dieser Strichcode kann beispielsweise durch die erfindungsgemäße Vorrichtung ermittelt werden. Ist der Strichcode nicht lesbar bzw. nicht vorhanden, weist die erfindungsgemäße Vorrichtung Mittel auf, Form bzw. das Gewicht des Leergutbehälters 1 zu bestimmen.

Die erfindungsgemäße Vorrichtung weist ein im Bereich der Aufnahmeeinheit 2 angeordnetes Drehorgan 3 auf, das mit einer Auflagefläche 4 versehen ist zur Aufnahme des von dem Benutzer eingesetzten Leergutbehälters 1. Im vorliegenden Ausführungsbeispiel ist das Drehorgan 3 als eine Flügelwelle mit von einer Drehachse D1 radial abragenden Flügeln 5 ausgebildet. Die Flügel 5 sind in Umfangsrichtung gleich verteilt angeordnet, wobei benachbarte Flügel 5 einen Winkel von 120° einschließen. Die Flügelwelle 3 weist eine solche axiale Länge auf, dass unterschiedlich große Leergutbehälter 1 liegend aufgenommen werden können. In einem Ausgangszustand der Flügelwelle 3 wird durch zwei in einem Winkel von 60° seitlich nach oben orientierten Flügeln 5' eine Mulde zur Aufnahme des Leergutbehälters 1 gebildet. Nach oben weisende Flügelflächen bilden die Auflagefläche 4 für den Leergutbehälter 1.

In vertikaler Richtung oberhalb des Drehorgans 3 ist eine optische Erkennungseinheit 6 in einem solchen Abstand zu dem Drehorgan 3 angeordnet, dass gegenüberliegende stirnseitige Endbereiche 7, 7' des Drehorgans 3 erfasst werden können. Die optische Erkennungseinheit 6 kann beispielsweise als eine CCD-Kamera ausgebildet sein.

Die Vorrichtung umfasst ferner eine Steuereinheit 8 zur Auswertung der von der optischen Erkennungseinheit 6 ermittelten Bilddaten. Ferner kann die Steuereinheit 8 eine Ansteuerung zu einem nicht dargestellten Verdrehantrieb für die Verdrehung des Drehorgans 3 um die Drehachse D1 aufweisen. Der Steuereinheit 8 ist eine Datenbank 9 (Datenspeicher) zugeordnet, in der Vergleichsdaten abgespeichert sind.

Die aus einem starren Material bestehenden Flügel 5, 5' sind jeweils mit einem Referenzmuster 10, vorzugsweise einem Streifenmuster versehen. Dieses Streifmuster 10 kann beispielsweise durch Aufdrucken auf den Flügelflächen 4 aufgebracht sein. Das Streifenmuster 10 weist eine Mehrzahl von Musterelementen bzw. Streifen 11 auf, die sich jeweils in radialer Richtung gradlinig erstrecken. Die Streifen 11 sind in einem gleichen Abstand a zueinander angeordnet. Die Streifen 11 verlaufen durchgehend von dem drehachsennahen Bereich zu einem umfangseitigen Rand 12 der Flügel 5.

Nachdem der Leergutbehälter 1 in die Mulde des Drehorgans 3 eingesetzt worden ist, erfolgt in einem ersten Schritt eine Formerkennung des Leergutbehälters 1. Vorzugsweise ist die Kamera 6 so justiert bzw. weist einen solchen Öffnungswinkel auf, dass sie Bilddaten zwischen dem ersten Endbereich (Stirnseite) 7 und dem zweiten Endbereich 7' (Stirnseite) der Flügelwelle 3 erfasst. Die von der Kamera 6 bereitgestellten Bilddaten des Leergutbehälters 1 werden in der Steuereinheit 8 weiterverarbeitet. Aus den Bilddaten werden Schnittpunkte S1 des Leergutbehälters 1 mit dem Streifenmuster 10 als Konturbilddaten extrahiert, mittels derer die Form und die Größe des Leergutbehälters 1 bestimmbar sind. Die Länge der Flaschen 1 kann beispielsweise durch die festgestellte Anzahl der von dem Leergutbehälter 1 geschnittenen Streifen 11 (Schnittpunkte S1) ermittelt werden.

Zusätzlich kann durch Zählen der zwischen dem ersten Stirnende 7 der Flügelwelle 3 und einem Ende des Leergutbehälters 1 ein Abstand x1, x2 des Leergutbehälters 2 zu dem Stirnende 7 bzw. die relative Positionierung des Leergutbehälters 1 zu der Flügelwelle 3 ermittelt werden. Die Ermittlung der Konturbilddaten des Leergutbehälters 1 sowie die Positionsbestimmung erfolgt in einem Schritt 15.

In einem weiteren Schritt 16 erfolgt ein Vergleich der Konturbilddaten des Leergutbehälters 1 mit Vergleichskonturdaten von einer Schar von vorgegebenen typischen Leergutbehältern. Die Vergleichskonturdaten sind in der Datenbank 9 als Vergleichsdaten abgespeichert und beinhalten beispielsweise die Konturdaten einer großen Kunststoffflasche, einer kleinen Kunststoffflasche, einer großen Glasflasche, einer kleinen Glasflasche gegebenenfalls unterschiedlicher Flaschenhersteller. Die Konturbilddaten des Leergutbehälters 1 bilden Identifizierungsdaten desselben, aus denen durch Vergleich mit vorgegebenen Bilddaten die Form des Leergutbehälters 1 ermittelbar ist.

Wird in einem weiteren Schritt 17 die Übereinstimmung von den Konturdaten des Leergutbehälters 1 mit einem der abgespeicherten Vergleichskonturdaten festgestellt, ist die Form des Leergutbehälters 1 ermittelt bzw. der Leergutbehälter 1 identifiziert.

Während bei einem Leegutbehälter 1 aus einem durchsichtigen Kunststoffmaterial innerhalb der den Leergutbehälter 1 begrenzenden Konturlinie eine geradlinige Schar von Schnittbildpunkten erfasst werden, werden bei einem Leergutbehälter 1 aus einem Glasmaterial eine Schar von bogenförmig angeordneten Schnittbildpunkten erfasst. Trotz gleicher Größe der Leergutbehälter 1 kann durch der geradlinigen oder bogenförmigen Verlauf der Schnittpunkte das Material des Leergutbehälters 1 bestimmt werden.

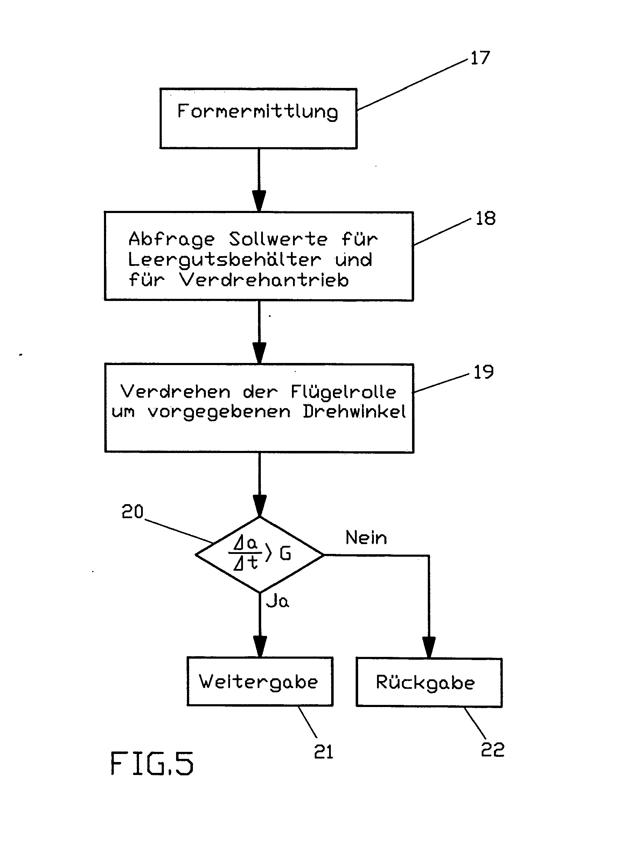

Ist der Formerkennungsvorgang abgeschlossen, wird ein Gewichtserkennungsvorgang eingeleitet, der in Figur 5 näher dargestellt ist. In einem ersten Schritt 18 werden für die ermittelte Form des Leergutbehälters 1 Sollwerte bzw. Zustandswerte aus der Datenbank 9 bereitgestellt. Handelt es sich beispielsweise um eine relativ große Kunststoffflasche, werden das Sollgewicht sowie der zulässige Füllungsgrad der Flasche mit Flüssigkeit abgerufen. Beispielsweise kann das Sollgewicht 700 g betragen sowie der zulässige Flüssigkeitsinhalt 300 g. In Abhängigkeit von diesen Daten wird ein später zu berücksichtigender Schwellwert G sowie die Solldrehgeschwindigkeit der Flügelwelle 3 bestimmt.

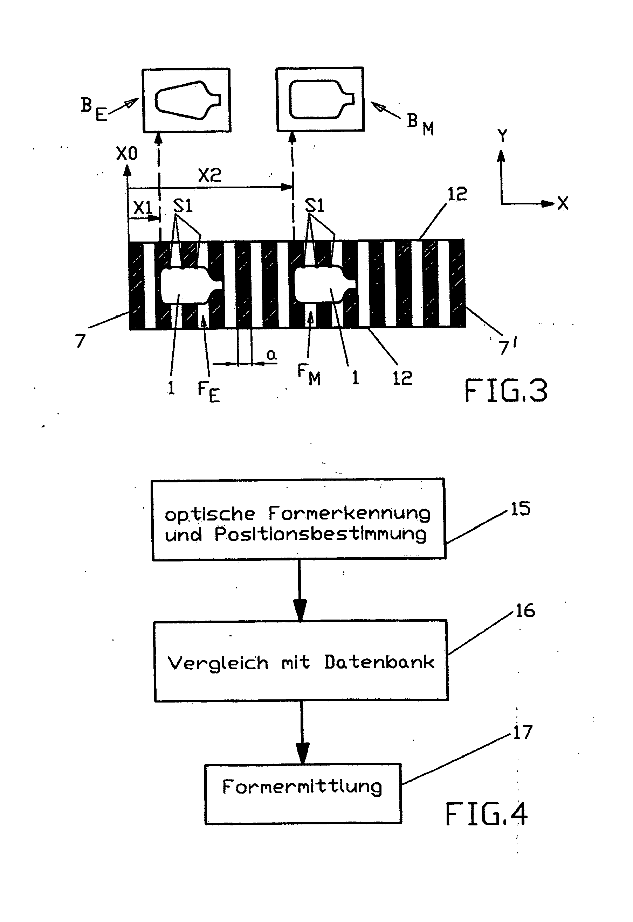

In einem nächsten Schritt 19 wird die Flügelwelle 3 mittels des Verdrehantriebes von dem ersten Drehwinkel (Nulllage) bis zu einem weiteren Drehwinkel verdreht. Vorzugsweise erfolgt die Verdrehung in einem spitzen Winkelbereich. Während des Verdrehens der Flügelwelle 3 erfolgen Bildaufnahmen durch die Kamera 6. Danach wird eine Änderung des Abstandes a benachbarter Streifen 14 in der Steuereinheit 8 ausgewertet, siehe Vergleich 20 in Figur 3. Überschreitet die zeitbezogene Änderung des Abstandes a (Δa/Δt) einen vorgegebenen Schwellwert G, trat keine unzulässige Verzögerung aufgrund des Gewichtes des Leergutbehälters 1 auf, so dass ein Weitergabesignal 21 erzeugt wird zur Weitergabe des Leergutbehälters 1 an die nächste Funktionseinheit.

Ist die tatsächliche Verdrehgeschwindigkeit der Flügelwelle 3 aufgrund des relativ hohen Füllungsgrades (mit Flüssigkeit) des Leergutbehälters 1 zu klein, wobei die Streifenabstandänderung Δa/Δt kleiner ist als der Schwellwert G, wird der Leergutbehälter 1 als voll angesehen und im Schritt 22 ein Rückgabesignal ausgegeben, um den Benutzer aufzufordern, die Flasche 1 aus der Aufnahmeeinheit 2 zu entnehmen. Für den nächsten Vorgang wird dann die Flügelwelle 3 wieder in die Nullposition zurückgedreht.

Für den Fall, dass die Flasche 1 akzeptiert worden ist, wird die Flügelwelle 3 weitergedreht, so dass der Flügel 5" und der Flügel 5''' die Mulde zur Aufnahme der nächsten Flasche 1 bilden.

Wie aus Figur 3 ersichtlich ist, können die Flaschen 1 auch identifiziert werden, wenn sie sich nicht in der Solllage F_{M}, sondern beispielsweise in einem zur Stirnseite 7 nahen Endlage F_{E} befinden. Während die Kamera 6 von dem in der Solllage F_{M} befindlichen Leergutbehälter 1 ein verzerrungsfreies Bild Bₘ aufnimmt, ergeben die Bilddaten des in der Endlage F_{E} angeordneten Leergutbehälters 1 ein verzerrtes Bild B_{E}. Da die Datenbank 9 als Vergleichsdaten unverzerrte Vergleichsbilddaten und verzerrte Vergleichsbilddaten vorhält, kann unter Ausnutzung von entsprechenden Speicherressourcen der Datenbank mit geringem Aufwand der Leergutbehälter 1 unabhängig von seiner Lage auf dem Drehorgan 3 identifiziert werden.

Nach einer alternativen Ausführungsform der Erfindung wird ein stirnseitig angeordneter Leergutbehälter 1 dadurch erkannt, dass nach Positionsbestimmung desselben die verzerrten Bilddaten umgerechnet werden in unverzerrte Bilddaten, so als würde sich der zu erfassende Leergutbehälter 1 nicht an der Stirnseite F_{E}, sondern in der mittigen Solllage F_{M} befinden. Die umgerechneten Bilddaten des Leergutbehälters 1 werden dann mit entsprechenden Vergleichsdaten der Datenbank 9 auf Übereinstimmung verglichen. Die Datenbank 9 enthält in diesem Fall lediglich Vergleichsbilddaten unverzerrter Leergutbehälter 1.

### Bezugszeichenliste

- 1: Leergutbehälter
- 2: Aufnahmeeinheit
- 3: Drehorgan/Flügelwelle
- 4: Auflagefläche
- 5, 5', 5'', 5''': Flügel
- 6: optische Erkennungseinheit
- 7, 7': Endbereich (3)
- 8: Steuereinheit
- 9: Datenbank
- 10: Referenzmuster
- 11: Musterelement/Streifen
- 12: umfangseitiger Rand
- 14: Streifen
- 15: 1. Schritt
- 16: 2. Schritt
- 17: 3. Schritt
- 18: 1. Schritt
- 19: 2. Schritt
- 20: 3. Schritt
- 21: 4. Schritt
- 22: 5. Schritt
- 30: Leergut-Rücknahmeautomat
- 31: Eingabeöffnung
- Bₘ: Bild
- G: Schwellwert
- F_{M}: Sollage
- F_{E}: Endlage
- x1, x2: Abstand

## Patentansprüche

1. Vorrichtung zur Erkennung von Leergutbehältern in einem Leergut-Rücknahmeautomat
- mit einer Aufnahmeeinheit (2) enthaltend ein um eine Drehachse drehbar gelagertes Drehorgan (3), das mindestens eine Auflagefläche (4) zur Aufnahme des Leergutbehälters (1) in einer ersten Drehstellung und zur Abgabe desselben in einer zweiten Drehstellung aufweist,
- mit einer optischen Erkennungseinheit (6) zur Erfassung von Bilddaten des Leergutbehälters,
- mit einer Steuereinheit (8) zur Verarbeitung von Bilddaten der optischen Erkennungseinheit und zur Ansteuerung des Drehorgans, **dadurch gekennzeichnet,**
- **dass** die Auflagefläche (4) mit einem Referenzmuster (10) versehen ist und dass die Vorrichtung Mittel umfasst, die aus den von der optischen Erkennungseinheit (6) erfassten Bilddaten Identifizierungsdaten zur Formerkennung und/oder Positionsbestimmung des Leergutbehälters ableiten.

2. Vorrichtung nach Anspruch 1, **dadurch gekennzeichnet, dass** der Steuereinheit eine Datenbank (9) mit einer Mehrzahl von leergutbehältertypbezogenen Vergleichsdaten zugeordnet ist, und die Vorrichtung Mittel zur Vergleichung dass durch Vergleich der erfassten Bilddaten mit den Vergleichsdaten aufweist, die die Form des Leergutbehälters (1) kennzeichnenden Identifizierungsdaten ermitteln.

3. Vorrichtung nach Anspruch 1 oder 2, **dadurch gekennzeichnet, dass** sich das Referenzmuster (10) vollständig über die Auflagefläche (4) des Drehorgans (3) erstreckt.

4. Vorrichtung nach einem der Ansprüche 1 bis 3, **dadurch gekennzeichnet, dass** das Referenzmuster (10) als ein Streifenmuster ausgebildet ist mit einer Mehrzahl von quer zur Längsachse des Leergutbehälters (1') oder des Drehorgans (3) verlaufenden Streifen (14).

5. Vorrichtung nach einem der Ansprüche 1 bis 4, **dadurch gekennzeichnet, dass** das Drehorgan (3) als eine Flügelwelle ausgebildet ist, wobei die Auflagefläche (4) durch zwei benachbarte Flügel (5', 5'', 5''') der Flügelwelle (3) gebildet ist.

6. Vorrichtung nach einem der Ansprüche 1 bis 5, **dadurch gekennzeichnet, dass** das Drehorgan (3) in einem Überprüfungsmodus derart von der ersten Drehstellung in eine weitere Drehstellung mit einer vorgegebenen Drehgeschwindigkeit verdrehbar ist, und dass die Vorrichtung Mittel umfasst, die aus den von der optischen Erkennungseinheit (6) erfassten zeitlich veränderten Bilddaten Identifizierungsdaten zur Gewichtserkennung des Leergutbehälters (1) ableitet.

7. Vorrichtung nach einem der Ansprüche 1 bis 6, **dadurch gekennzeichnet, dass** die Datenbank (9) Vergleichskonturdaten des Leergutbehälters (1) für eine Solllage (F_{M}) desselben, in der die optische Erkennungseinheit (6) senkrecht zum Leergutbehälter (1) angeordnet ist, und Vergleichskonturdaten des Leergutbehälters (1) für eine Endlage (F_{E}) desselben, in der die optische Erkennungseinheit (6) in einem spitzen Winkel zu dem Leergutbehälter (1) angeordnet ist, aufweist.

8. Verfahren zur Erkennung von Leergutbehältern, wobei ein Leergutbehälter (1) auf einer Auflagefläche (4) eines Drehorgans (3) abgelegt wird und mittels einer optischen Erkennungseinheit (6) erfasst wird, so dass aus den von der optischen Erkennungseinheit bereitgestellten Bilddaten Identifizierungsdaten ermittelt werden zur Formerkennung des Leergutbehälters, **dadurch gekennzeichnet, dass** die Auflagefläche (4) mit einem Refernzmuster (10) versehen ist und dass der auf der mit dem Referenzmuster (10) versehenen Auflagefläche liegende Leergutbehälter (1) im Ruhezustand von der optischen Erkennungseinheit (6) erfasst wird, wobei durch Vergleich der ermittelten Bilddaten mit vorgegebenen leergutbehältertypbezogenen Vergleichsdaten, die formbestimmenden Identifizierungsdaten des Leergutbehälters (1) bestimmt werden.

9. Verfahren nach Anspruch 8, **dadurch gekennzeichnet, dass** die ermittelten Bilddaten des Leergutbehälters (1) in einer Steuereinheit (8) so verarbeitet werden, dass aus einer Schar von Schnittpunkten (S) des Leergutbehälters (1) und des Referenzmusters (10) Konturdaten des Leergutbehälters (1) ermittelt werden, so dass durch Vergleich der aktuellen Konturdaten mit den abgespeicherten Vergleichskonturdaten die Form und/oder das Material des Leergutbehälters (1) bestimmt wird.

10. Verfahren nach Anspruch 8 oder 9, **dadurch gekennzeichnet, dass** die ermittelten Bilddaten des Leergutbehälters (1) in der Steuereinheit (8) so weiterverarbeitet werden, dass zusätzlich zu der Kontur des Leergutbehälters (1) der aktuelle Abstand des Leergutbehälters (1) zu einem Stirnende (13, 13') des Drehorgans (3) ermittelt wird zur Positionsbestimmung des Leergutbehälters (1), dass bei abweichender Anordnung des Leergutbehälters (1) von einer Solllage (F_{M}) auf der Auflagefläche (4) die ermittelten Konturdaten des Leergutbehälters (1) umgerechnet werden in Konturdaten, die der Lage desselben Leergutbehälters (1) in der Solllage (F_{M}) entsprechen.

11. Verfahren nach einem der Ansprüche 8 bis 10, **dadurch gekennzeichnet, dass** der Leergutbehälter (1) um eine parallel zur Längsachse des Leergutbehälters (1) verlaufenden Drehachse(D1) mit einer von der vorher ermittelten Formerkennung abhängigen Drehgeschwindigkeit verdreht wird, wobei eine optisch aufgenommene zeitliche Abstandsänderung zwischen Musterelementen (14) des Referenzmusters (10) mit einem vorgegebenen gewichtsbezogenen Schwellwert (G) verglichen wird, so dass bei Übersteigen des Schwellwertes (G) durch die ermittelte zeitliche Abstandsänderung der Leergutbehälter (1) als ein den zulässigen Füllungsgrad mit Flüssigkeit überschreitender Leergutbehälter (1) erkannt und dann ein Rückgabesignal (22) erzeugt wird oder bei Nichtüberschreiten des Schwellwertes (G) durch die ermittelte zeitliche Abstandsänderung der Leergutbehälter (1) als ein den zulässigen Füllungsgrad mit Flüssigkeit aufweisender Leergutbehälter (1) erkannt und dann einer weiteren Funktionseinheit übergeben wird.

## Claims

1. Device for detecting empty containers in an empty container reverse vending machine
- having a receiving unit (2) containing a rotary element (3) mounted so as to rotate about an axis of rotation, which has at least one supporting surface (4) to receive the empty container (1) in a first rotary position and to discharge the same in a second rotary position,
- having an optical detection unit (6) for acquiring image data from the empty container,
- having a control unit (8) for processing image data from the optical detection unit and for activating the rotary element,
**characterized**
- **in that** the supporting surface (4) is provided with a reference pattern (10) and in that the device comprises means which, from the image data acquired by the optical detecting unit (6), derive identification data for detecting the shape and/or determining the position of the empty container.

2. Device according to Claim 1, **characterized in that** the control unit is assigned a database (9) having a multiplicity of empty container type-based comparative data, and the device has means for comparing the acquired image data with the comparative data, which determine identification data characterizing the shape of the empty container (1).

3. Device according to Claim 1 or 2, **characterized in that** the reference pattern (10) extends completely over the supporting surface (4) of the rotary element (3).

4. Device according to one of Claims 1 to 3, **characterized in that** the reference pattern (10) is formed as a stripe pattern having a multiplicity of stripes (14) extending transversely with respect to the longitudinal axis of the empty container (1') or of the rotary element (3).

5. Device according to one of Claims 1 to 4, **characterized in that** the rotary element (3) is formed as a vane shaft, the supporting surface (4) being formed by two adjacent vanes (5', 5'', 5''') of the vane shaft (3).

6. Device according to one of Claims 1 to 5, **characterized in that**, in a checking mode, the rotary element (3) can be rotated from the first rotary position into a further rotary position at a predefined speed of rotation, and **in that** the device comprises means which derive, from the chronologically changed image data acquired by the optical detecting unit (6), identification data for detecting the weight of the empty container (1).

7. Device according to one of Claims 1 to 6, **characterized in that** the database (9) has comparative contour data from the empty container (1) for an intended position (F_{M}) of the same, in which position the optical detection unit (6) is arranged at right angles to the empty container (1), and comparative contour data from the empty container (1) for an end position (F_{E}) of the same, in which position the optical detection unit (6) is arranged at an acute angle with respect to the empty container (1).

8. Method for detecting empty containers, wherein an empty container (1) is laid on a supporting surface (4) of a rotary element (3) and is registered by means of an optical detection unit (6), so that, from the image data provided by the optical detection unit, identification data are determined for detecting the shape of the empty container, **characterized in that** the supporting surface (4) is provided with a reference pattern (10), and **in that** the empty container (1) lying on the supporting surface provided with the reference pattern (10) is registered by the optical detection unit (6) when at rest, wherein, by comparing the image data determined with predefined empty container type-based comparative data, the shape-determining identification data from the empty container (1) are determined.

9. Method according to Claim 8, **characterized in that** the image data determined from the empty container (1) are processed in a control unit (8) such that, from a family of points of intersection (S) of the empty container (1) and of the reference pattern (10), contour data from the empty container (1) are determined, so that, by comparing the current contour data with the stored comparative contour data, the shape and/or the material of the empty container (1) is/are determined.

10. Method according to Claim 8 or 9, **characterized in** the image data determined from the empty container (1) are processed further in the control unit (8) such that, in addition to the contour of the empty container (1), the current spacing of the empty container (1) from a front end (13, 13') of the rotary element (3) is determined in order to determine the position of the empty container (1), **in that**, in the event of a deviating arrangement of the empty container (1) from an intended position (F_{M}) on the supporting surface (4), the contour data determined from the empty container (1) are converted into contour data which correspond to the position of the same empty container (1) in the intended position (F_{M}).

11. Method according to one of Claims 8 to 10, **characterized in that** the empty container (1) is rotated about an axis of rotation (D1) extending parallel to the longitudinal axis of the empty container (1) at a rotational speed that depends on the previously determined shape detection, wherein an optically recorded chronological distance change between pattern elements (14) of the reference pattern (10) is compared with a predefined weight-based threshold value (G), so that, if the threshold value (G) is exceeded by the determined chronological distance change, the empty container (1) is detected as an empty container (1) exceeding the permissible filling level with liquid and then a return signal (22) is generated or, if the threshold value (G) is not exceeded by the determined chronological distance change, the empty container (1) is detected as an empty container (1) having the permissible filling level with liquid and is then transferred to a further functional unit.

## Revendications

1. Dispositif de reconnaissance de récipients consignés dans un automate de retour de récipients consignés
- comportant une unité de réception (2) contenant un organe tournant (3) monté de manière à pouvoir tourner autour d'un axe de rotation, qui comporte au moins une surface de dépôt (4) destinée à recevoir le récipient consigné (1) à une première position de rotation et à délivrer ce dernier à une seconde position de rotation,
- comportant une unité de reconnaissance optique (6) destinée à acquérir des données d'image du récipient consigné,
- comportant une unité de commande (8) destinée à traiter des données d'image de l'unité de reconnaissance optique et à commander l'organe tournant,
**caractérisé**
- **en ce que** la surface de dépôt (4) est munie d'un motif de référence (10) et en ce que le dispositif comprend des moyens qui déduisent des données d'identification destinées à la reconnaissance de forme et/ou à la détermination de position du récipient consigné à partir des données d'image détectées par l'unité de reconnaissance optique (6).

2. Dispositif selon la revendication 1, **caractérisé en ce que** l'unité de commande est associée à une banque de données (9) comportant une pluralité de données de comparaison dépendant du type de récipient consigné, et **en ce que** le dispositif comprend des moyens destinés à comparer les données d'image détectées aux données de comparaison, lesquels moyens déterminent des données d'identification caractérisant la forme du récipient consigné (1).

3. Dispositif selon la revendication 1 ou 2, **caractérisé en ce que** le motif de référence (10) s'étend entièrement en dessous de la surface de dépôt (4) de l'organe tournant (3).

4. Dispositif selon l'une quelconque des revendications 1 à 3, **caractérisé en ce que** le motif de référence (10) est réalisé sous la forme d'un motif de bandes comportant une pluralité de bandes (14) s'étendant transversalement à l'axe longitudinal du récipient consigné (1') ou de l'organe tournant (3).

5. Dispositif selon l'une quelconque des revendications 1 à 4, **caractérisé en ce que** l'organe tournant (3) est réalisé sous la forme d'un arbre à pales, dans lequel la surface de dépôt (4) est formée par deux pales voisines (5', 5'', 5''') de l'arbre à pales (3).

6. Dispositif selon l'une quelconque des revendications 1 à 5, **caractérisé en ce que** l'organe tournant (3) peut ainsi être mis en rotation dans un mode de vérification de la première position de rotation à une autre position de rotation avec une vitesse de rotation prédéterminée, et **en ce que** le dispositif comprend des moyens destinés à déduire les données d'identification à partir des données d'image modifiées dans le temps et détectées par l'unité de reconnaissance optique (6) pour reconnaître le poids du récipient consigné (1).

7. Dispositif selon l'une quelconque des revendications 1 à 6, **caractérisé en ce que** la banque de données (9) comprend des données de contours de comparaison du récipient consigné (1) pour une position nominale (F_{M}) de ce dernier à laquelle l'unité de reconnaissance optique (6) est disposée perpendiculairement au récipient consigné (1), et des données de contours de comparaison du récipient consigné (1) pour une position finale (F_{E}) de ce dernier à laquelle l'unité de reconnaissance optique (6) est disposée en formant un angle aigu par rapport au récipient consigné (1).

8. Procédé destiné à reconnaître des récipients consignés, dans lequel un récipient consigné (1) est déposé sur une surface de dépôt (4) d'un organe tournant (3) et détecté au moyen d'une unité de reconnaissance optique (6), de manière à ce que des données d'identification soient déterminées à partir des données d'image fournies par l'unité de reconnaissance optique pour reconnaître la forme du récipient consigné, **caractérisé en ce que** la surface de dépôt (4) est munie d'un motif de référence (10) et **en ce que** le récipient consigné (1) se trouvant sur la surface de dépôt munie du motif de référence (10) est détecté à l'état de repos par l'unité de reconnaissance optique (6), dans lequel les données d'identification déterminant la forme du récipient consigné (1) sont déterminées par comparaison des données d'image obtenues à des données de comparaison prédéterminées dépendant du type de récipient consigné.

9. Procédé selon la revendication 8, **caractérisé en ce que** les données d'image obtenues du récipient consigné (1) sont traitées dans une unité de commande (8) de manière à ce que des données de contours du récipient consigné (1) soient obtenues à partir d'un série de points d'intersection (S) du récipient consigné (1) et du motif de référence (10), de manière à ce que la forme et/ou le matériau du récipient consigné (1) soit déterminé par comparaison des données de contours effectives aux données de contours de comparaison stockées.

10. Procédé selon la revendication 8 ou 9, **caractérisé en ce que** les données d'image obtenues du récipient consigné (1) sont soumises à un traitement supplémentaire dans l'unité de commande (8) de manière à ce que la distance effective du récipient consigné (1) par rapport à une extrémité avant (13, 13') de l'organe tournant (3) soit obtenue en plus du contour du récipient consigné (1) pour déterminer la position du récipient consigné (1), **en ce que**, lorsque la disposition du récipient consigné (1) s'écarte de la position nominale (F_{M}) sur la surface de dépôt (4), les données de contours déterminées du récipient consigné (1) sont converties en données de contours qui correspondent à la position dudit récipient consigné (1) à la position nominale (F_{M}).

11. Procédé selon l'une quelconque des revendications 8 à 10, **caractérisé en ce que** le récipient consigné (1) est mis en rotation autour d'un axe de rotation (D1) s'étendant parallèlement à l'axe longitudinal du récipient consigné (1) à une vitesse de rotation dépendant de la reconnaissance de forme préalablement déterminée, dans lequel une variation temporelle de distance acquise optiquement entre des éléments de motif (14) du motif de référence (10) est comparée à une valeur de seuil (G) prédéterminée dépendant du poids, de manière à ce que lorsque la valeur de seuil (G) est dépassée par la variation temporelle de distance déterminée, le récipient consigné (1) soit reconnu comme étant un récipient consigné (1) dépassant un niveau de remplissage de liquide admissible et à ce qu'un signal de retour (22) soit ensuite généré, ou à ce que lorsque la valeur de seuil (G) n'est pas dépassée par la variation temporelle de distance déterminée, le récipient consigné (1) soit reconnu comme étant un récipient consigné (1) présentant le niveau de remplissage de liquide admissible et à ce qu'il soit ensuite délivré à une autre unité fonctionnelle.
